# FASCICULE DE BREVET EUROPEEN

(11) **EP 3 159 991 B1**
(45) Date de publication et mention de la délivrance du brevet: **03.11.2021**
(21) Numéro de dépôt: 16188572.8
(22) Date de dépôt: 13.09.2016
(51) Int. Cl.: H02H 3/02, H01H 9/54, H02H 3/44, H02H 7/22, H02H 9/02

(54) **DISPOSITIF ET PROCEDE DE LIMITATION D'UN PREMIER PIC DE COURANT DANS UN RESEAU ELECTRIQUE**
VORRICHTUNG UND VERFAHREN ZUR BEGRENZUNG EINER ERSTEN STROMSPITZE IN EINEM STROMNETZ
DEVICE AND METHOD FOR LIMITING A FIRST CURRENT PEAK IN AN ELECTRIC NETWORK

(30) Priorité: 14.09.2015 FR 1558535
(43) Date de publication de la demande: 26.04.2017
(73) Titulaire: Schneider Electric Industries SAS, 92500 Rueil-Malmaison (FR)
(72) Inventeur: DOUCHIN, Jérôme, 38050 Grenoble Cedex 9 (FR)
(74) Mandataire: Brevalex

(56) Documents cités:
- EP-A1- 0 834 975
- EP-A1- 2 320 535
- EP-A1- 2 728 691
- EP-A2- 2 381 455
- EP-A2- 2 549 609
- WO-A1-2006/083334
- DE-A1- 4 445 961
- DE-A1-102005 040 432
- US-A1- 2014 268 461

## Description

### DOMAINE TECHNIQUE

L'invention se situe dans le domaine de la tenue des équipements électriques hautes tension aux courants des court-circuit de court-durée, et concerne plus spécifiquement un dispositif de limitation d'un premier pic de courant résultant d'un court-circuit dans un réseau électrique moyenne ou haute tension, c'est-à-dire de tension alternative supérieure à 1000 Volts.

L'invention concerne également un procédé de limitation de tels pics de courant dans un réseau électrique moyenne ou haute tension.

### ÉTAT DE LA TECHNIQUE ANTÉRIEURE

Afin de réduire les coûts de leurs installations, les opérateurs des réseaux électriques ont tendance à simplifier l'architecture des réseaux en connectant toutes les sources et les gros moteurs sur la même barre de distribution, soit de 7,2kV ou de 12kV. Cela conduit à une augmentation des niveaux de courant de court-circuit, et à une valeur très élevée de la valeur de crête du courant résultant du court-circuit. Ces niveaux peuvent être atteints du fait de la connexion de plusieurs sources à la barre principale. Il en résulte que la valeur du courant de crête du court-circuit, qui se produit très rapidement après l'apparition de court-circuit (10ms à 50Hz, 8ms à 60Hz), ne peut pas être supportée par un équipement standard. Il est alors nécessaire de diminuer ce pic de courant en agissant avant que le courant de crête ne soit atteint, c'est-à-dire dans les 10ms suivant l'apparition du défaut (ou dans les 8ms si 60Hz).

Un autre problème des réseaux électriques est dû au niveau élevé de la composante continue du courant, et de la tension transitoire de rétablissement (TRV Transcient Recovery Voltage, en anglais).

Un but de l'invention est de pallier aux inconvénients décrits ci-dessus.

On notera qu'il est également connu du document EP 2381455 un limiteur hybride de courant de défaut comprenant : une unité de commutation pour commander un contact mobile situé sur un câble et fournissant un signal de déclenchement si un courant de défaut circule dans un réseau électrique, une unité de commutation à semiconducteurs connecté en série avec l'unité de commutation et configurée pour être coupée afin de limiter la circulation du courant de défaut, et une unité de coupure connectée en parallèle à l'unité de commutation et à l'unité de commutation à semiconducteurs et configurée pour limiter le courant de défaut détourné de l'unité de commutation et de l'unité de commutation à semi-conducteurs. Il est également connu du document US2014268461 un circuit de commande pour un interrupteur de circuit électrique de puissance, le circuit de commande comprenant un portion de circuit d'échantillonage, section de circuit de transformée de Fourrier discrète (DFT) et un différenciateur configuré pour différencier un signal de détection et un ontroleur pour déterminer s'il faut commander l'ouverture de l'interrupteur.

Un autre but de l'invention est de pouvoir alimenter et couper de façon sûre un réseau haute tension ayant un courant de court-circuit, à 63kA par exemple, alors que l'installation électrique est équipée d'un tableau de distribution calibré seulement pour un courant de court-circuit inférieur, 50kA par exemple, évitant ainsi de concevoir un nouveau tableau plus largement dimensionné.

Cet objectif est réalisable car il existe une topologie connue dans laquelle plusieurs sources contribuent au courant de court-circuit, la barre principale étant découpée au moins en deux à l'aide d'un dispositif de couplage (tie breaker en anglais). En appliquant une stratégie séquentielle de déclenchement (ouvrir d'abord le dispositif de couplage, puis le disjoncteur d'alimentation du départ en défaut), les disjoncteurs ne coupent chacun que la moitié du courant de court-circuit initial, si les deux demi-barres sont alimentées par des sources identiques.

### EXPOSÉ DE L'INVENTION

Le but de l'invention est atteint au moyen d'un procédé selon la revendication 3.

Ce procédé est mis en œuvre au moyen d'un dispositif de limitation selon la revendication 1.

Le module de détection et de commande reçoit la mesure réalisée par le module de mesure de courants de court-circuit, détecte (par calcul) l'apparition prochaine d'un pic de courant à partir de cette mesure, puis effectue si besoin la commande de l'interrupteur rapide et du circuit circuit électronique de coupure.

Selon l'invention, le module de mesure est adapté pour mesurer la dérivée du courant en fonction du temps dl/dt de façon à anticiper l'apparition du premier pic de courant et à accélérer le déclenchement (réaction ultra rapide).

Dans un exemple particulier de réalisation de l'invention, le circuit électronique de coupure comporte deux thyristors montés tête-bêche.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- la figure 1 illustre schématiquement la topologie d'un réseau électrique dans lequel est utilisé un dispositif selon l'invention,
- la figure 2 illustre schématiquement dispositif de limitation d'un premier pic de courant selon l'invention.
- La figure 3 montre une décomposition du courant de court-circuit en composantes alternative et continue, et illustre l'impact de l'invention sur la composante continue.
- La figure 4 est une courbe de comparaison des courants de crête respectivement sans et avec le procédé selon l'invention.

### EXPOSÉ DÉTAILLÉ DE MODES DE RÉALISATION PARTICULIERS

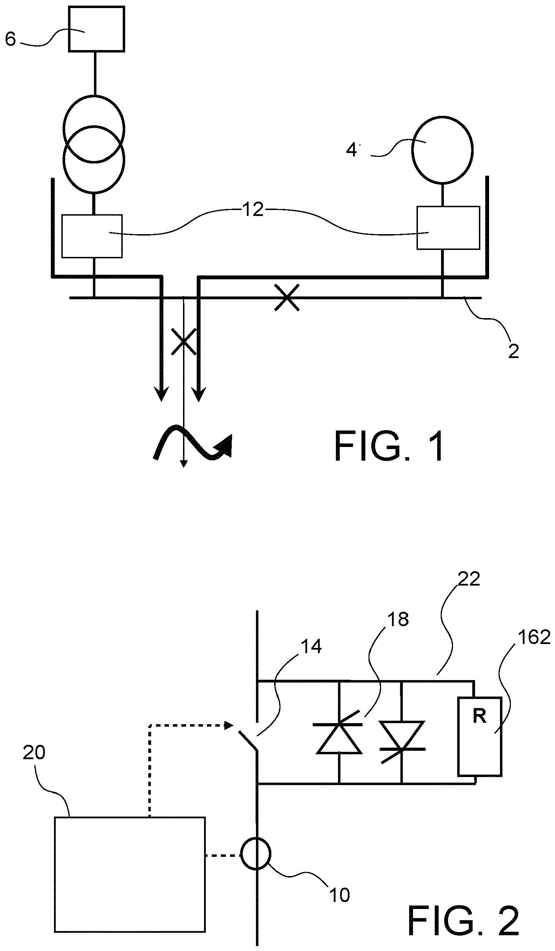

La figure 1 illustre schématiquement un réseau électrique moyenne ou haute tension comportant deux sources de courant, respectivement source 4 et source 6 contribuant à un court-circuit, chaque source délivrant un courant de 31,5 kA. Le but est de couper un courant de crête de 63kA avec des appareils prévus pour couper seulement 50kA. La solution technique consiste à augmenter la partie résistive de l'impédance de source par insertion d'une résistance en série avec le dispositif d'alimentation de la source afin de diminuer la composante continue du courant de crête. Ceci est obtenu au moyen d'un dispositif de limitation 12 détaillé dans la figure 2 et placé en série avec chacune des sources.

Ce dispositif de limitation 12 comporte un module 10 de mesure d'un pic de courant dans le réseau électrique, un circuit électrique 22 comportant, en parallèle, un interrupteur rapide 14, une résistance électrique 16 et un circuit électronique de coupure 18, et un module de détection et de commande 20. Le module de détection et de commande 20 (appelé aussi relais de protection) est configuré pour, d'une part, ouvrir l'interrupteur rapide 14 avant l'apparition dudit pic de courant de façon à dévier le courant dans la résistance électrique 16 de manière à diminuer le courant de crête dans des appareils situés en aval dudit circuit électrique 22 et, d'autre part, pour fermer successivement le circuit électronique de coupure 18 de manière à protéger la résistance 16 contre une surchauffe puis l'interrupteur rapide 14 après limitation du premier pic de courant par ladite résistance 16. La fermeture du circuit électronique de coupure 18 puis de l'interrupteur rapide 14 survient généralement après l'instant du premier pic de courant.

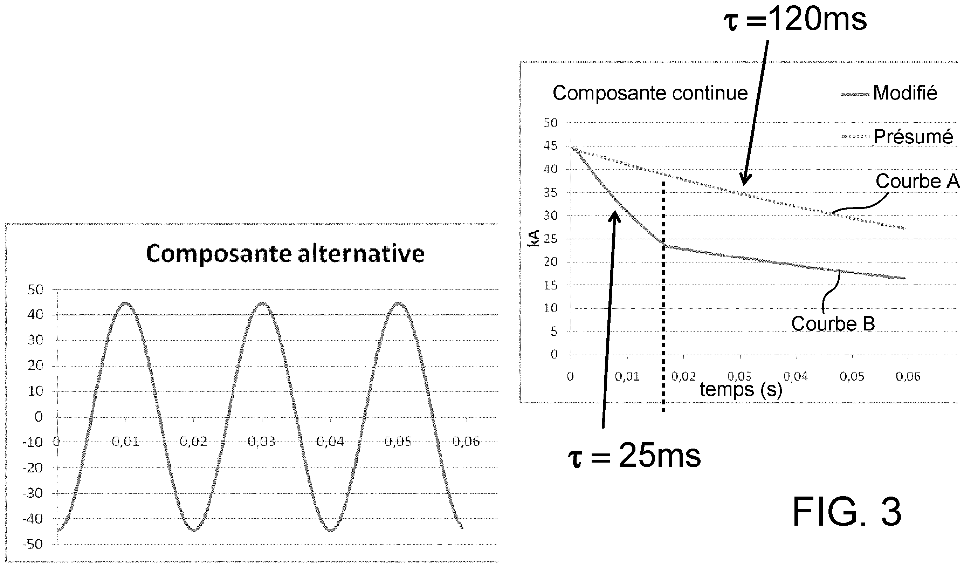

La résistance 16 permet ainsi d'augmenter la partie résistive de l'impédance de source, et par conséquent, de diminuer la composante continue du courant comme cela est illustré par la figure 3.

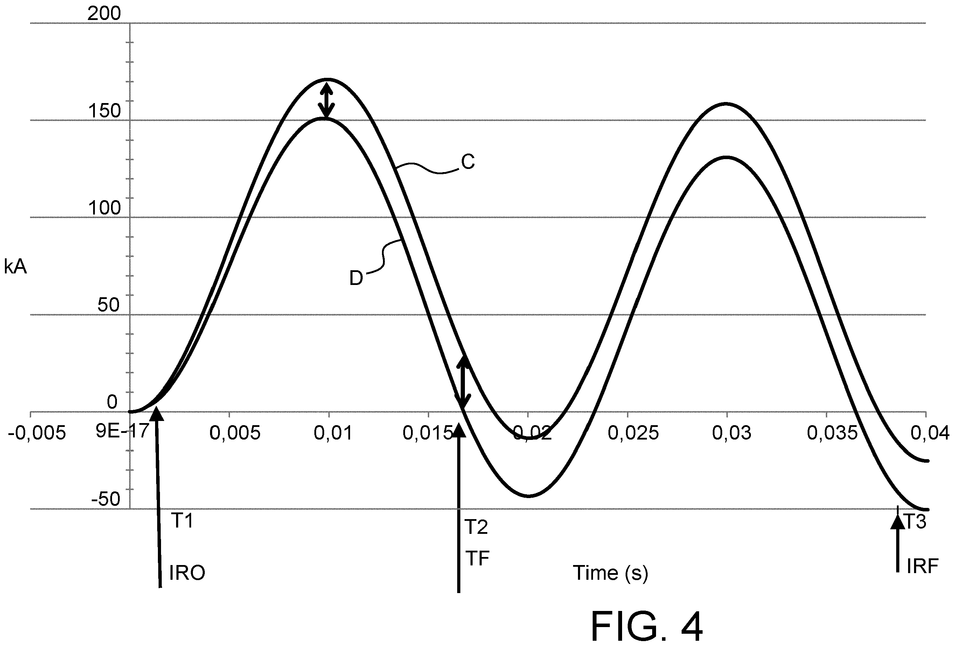

Comme illustré par la figure 3, la composante continue du courant (ldc - DC component) a une constante de temps typiquement de 120ms en l'absence de la résistance (courbes A - modifiée) et de typiquement 25ms lorsque le courant circule à travers une résistance (courbes B - presumée) Quand le courant traverse la résistance 16, la composante continue décroît plus vite (courbe B) ce qui permet de diminuer plus rapidement le courant de crête comme cela est illustré par la figure 4.

Notons que dans un réseau électrique 50Hz, le courant de crête est atteint au bout de 10ms. Pour réduire ce courant de crête, le dispositif selon l'invention utilise un détecteur de défaut très rapide adapté pour mesurer simultanément le courant I et la pente du courant dl/dt de façon à anticiper l'ordre de déclenchement du dispositif au plus tôt. Il existe de tels détecteurs capables de détecter l'apparition d'un défaut en moins de 1 ms.

Aussi, dès la détection d'un défaut, le module de détection et de commande 20 ouvre de façon réflexe l'interrupteur rapide 14, lequel est capable de répondre en moins de 2ms. L'interrupteur rapide 14 est par exemple un interrupteur de type Duro utilisant des bobines de Thomson ou un déclencheur pyrotechnique. Dès que l'interrupteur rapide 14 est ouvert, le courant est dirigé vers la résistance 16. Il en résulte une diminution plus rapide de la composante continue du courant, et partant une limitation du pic de courant.

Cependant, la résistance 16 risque de chauffer par effet joule en raison du fort courant qui la traverse. Il est donc nécessaire de shunter cette résistance après le passage du pic de courant. Ceci est obtenu au moyen du circuit électronique de coupure 18. Ce dernier préférentiellement constitué par deux thyristors montés tête-bêche.

La figure 4 représente les courbes C et D illustrant respectivement les variations en fonction du temps du courant de crête sans et avec déviation du courant via la résistance 16. L'interrupteur rapide 14 est ouvert lors de la première alternance à l'instant t1 dès la détection d'un défaut, de sorte que le courant est dévié sur la résistance 16, puis, à l'instant t2, les thyristors montés tête-bêche sont fermés pour protéger la résistance 16. Ensuite, on referme l'interrupteur rapide 14 à l'instant t3 après absorption du premier pic de courant par ladite résistance 16. L'instant t2, qui est déterminé notamment en fonction des caractéristiques de la résistance 16, est choisi généralement après le passage du premier pic de courant. L'instant t3 est déterminé en fonction des performances de refermeture de l'interrupteur rapide 14.

A la deuxième alternance, dans la mesure où la composante continue du courant continue à décroître, le pic de courant sera moins important que le premier pic préalablement limité au moyen de la résistance.

La coupure classique du circuit aura lieu via le disjoncteur au bout de 50-80ms environ. Notons que l'invention ne permet pas d'ouvrir complètement le circuit mais seulement de limiter le courant de crête survenant avant l'ouverture classique du disjoncteur.

## Revendications

1. Réseau électrique moyenne ou haute tension comprenant au moins deux sources de courant apte à contribuer à un courant de court-circuit du réseau électrique d'une valeur donnée, une installation électrique reliée auxdites sources de courant, et un disjoncteur, l'installation électrique étant équipée d'un tableau de distribution calibré pour un courant de court-circuit inférieur à ladite valeur donnée, le réseau électrique comprenant en outre des dispositifs de limitation (12) d'un premier pic de courant résultant d'un défaut dans le réseau électrique, chacune des sources de courant étant connectée à l'installation électrique par l'intermédiaire d'un dispositif de limitation qui lui est respectif, chaque dispositif de limitation comportant :
- un module (10) de mesure de courants de court-circuit dans ledit réseau électrique adapté pour mesurer la dérivée du courant de la source de courant correspondante en fonction du temps dl/dt de façon à anticiper l'apparition d'un premier pic de courant et à accélérer le déclenchement du dispositif de limitation (12) avant que le pic de courant n'atteigne sa valeur crête,
- un circuit électrique (22) formé d'un interrupteur rapide (14), d'une résistance électrique (16) et d'un circuit électronique de coupure (18) montés en parallèle les uns avec les autres, **caractérisé en ce qu'**il comporte en outre:
- un module de détection et de commande (20) configuré pour, d'une part et alors que le circuit électronique de coupure (18) est ouvert, ouvrir l'interrupteur rapide (14) avant l'apparition du premier pic de courant pour dévier le courant sur la résistance électrique (16) de manière à diminuer le pic de courant dans le tableau de distribution et, d'autre part, pour fermer le circuit électronique de coupure (18) de manière à protéger la résistance (16) contre une surchauffe, puis l'interrupteur rapide (14) après limitation du premier pic de courant par ladite résistance (16), la coupure de l'installation électrique par le disjoncteur ayant lieu après fermeture de l'interrupteur rapide.

2. Réseau électrique moyenne ou haute tension selon la revendication 1 dans lequel chaque circuit électronique de coupure (18) comporte deux thyristors montés tête-bêche.

3. Procédé de limitation d'un premier pic de courant résultant d'un défaut
dans un réseau électrique moyenne ou haute tension comprenant au moins deux sources de courant contribuant à un courant de court-circuit du réseau électrique d'une valeur donnée, une installation électrique reliée auxdites sources de courant, et un disjoncteur, l'installation électrique étant équipée d'un tableau de distribution calibré pour un courant de court-circuit inférieur à ladite valeur donnée, ledit procédé étant mis en œuvre au moyen de dispositifs de limitation (12) d'un premier pic de courant comportant chacun un module (10) de mesure de courants de court-circuit dans ledit réseau électrique,un circuit électrique (12) constitué par un interrupteur rapide (14), une résistance électrique (16) et un circuit électronique de coupure (18) montés en parallèle les uns avec les autres, chaque source de courant étant en série avec un dispositif de limitation respectif la connectant à l'installation électrique, le procédé **caractérisé en ce qu'**il comporte les étapes suivantes:
- détecter de façon anticipée une future apparition du premier pic de courant dans ledit réseau électrique au moyen d'un module (10) de mesure de courants de court-circuit dans ledit réseau électrique adapté pour mesurer la dérivée du courant de la source de courant correspondante en fonction du temps dl/dt de façon à anticiper l'apparition du premier pic de courant et à accélérer le déclenchement du dispositif avant que le pic de courant n'atteigne sa valeur crête,
- dévier le courant sur la résistance électrique (16) de manière à diminuer le pic de courant dans le tableau de distribution en ouvrant l'interrupteur rapide (14) avant que le pic de courant n'atteigne sa valeur crête présumée, le circuit électronique de coupure (18) étant ouvert,
- fermer le circuit électronique de coupure (18) de manière à protéger la résistance contre une surchauffe, puis, fermer l'interrupteur rapide (14) après limitation du premier pic de courant par ladite résistance (16),
- coupure de l'installation électrique par le disjoncteur après la fermeture de l'interrupteur rapide (14).

## Patentansprüche

1. Elektrisches Mittel- oder Hochspannungsnetz, enthaltend zumindest zwei Stromquellen, die dazu geeignet sind, mit einem gegebenen Betrag zu einem Kurzschlussstrom des elektrischen Netzes beizutragen, eine elektrische Anlage, die mit den Stromquellen verbunden ist, und einen Leistungsschutzschalter, wobei die elektrische Anlage mit einer Schalttafel ausgestattet ist, die für einen Kurzschlussstrom kalibriert ist, der niedriger als der gegebene Betrag ist, wobei das elektrische Netz ferner Begrenzungsvorrichtungen (12) zur Begrenzung einer ersten Stromspitze enthält, die aus einem Fehler im elektrischen Netz resultiert, wobei jede der Stromquellen über eine jeweilige Begrenzungsvorrichtung mit der elektrischen Anlage verbunden ist,
wobei jede Begrenzungsvorrichtung enthält:
- ein Modul (10) zum Messen von Kurzschlussströmen in dem elektrischen Netz, das dazu ausgelegt ist, die Ableitung des Stroms von der entsprechenden Stromquelle in Abhängigkeit von der Zeit dl/dt zu messen, um das Auftreten einer ersten Stromspitze zu antizipieren und das Auslösen der Begrenzungsvorrichtung (12) zu beschleunigen, bevor die Stromspitze ihren Spitzenwert erreicht,
- eine elektrische Schaltung (22), die aus einem Schnellschalter (14), einem elektrischen Widerstand (16) und einer elektronischen Abschaltschaltung (18) gebildet ist, die parallel miteinander geschaltet sind,
**dadurch gekennzeichnet, dass** sie ferner enthält:
- ein Erfassungs- und Steuermodul (20), das dazu ausgelegt ist, einerseits bei geöffneter elektronischer Abschaltschaltung (18) den Schnellschalter (14) vor dem Auftreten der ersten Stromspitze zu öffnen, um den Strom auf den elektrischen Widerstand (16) umzuleiten, um die Stromspitze in der Schalttafel zu reduzieren, und andererseits die elektronische Abschaltschaltung (18) zu schließen, um den Widerstand (16) vor Überhitzung zu schützen, und dann den Schnellschalter (14) nach Begrenzung der ersten Stromspitze durch den Widerstand (16) zu schließen, wobei die Abschaltung der elektrischen Anlage durch den Leistungsschutzschalter nach dem Schließen des Schnellschalters erfolgt.

2. Elektrisches Mittel- oder Hochspannungsnetz nach Anspruch 1, wobei jede elektronische Abschaltschaltung (18) zwei Thyristoren umfasst, die gegensinnig geschaltet sind.

3. Verfahren zur Begrenzung einer ersten Stromspitze, die aus einem Fehler in einem elektrischen Mittel- oder Hochspannungsnetz resultiert, enthaltend zumindest zwei Stromquellen, die mit einem gegebenen Betrag zu einem Kurzschlussstrom des elektrischen Netzes beitragen, eine elektrische Anlage, die mit den Stromquellen verbunden ist, und einen Leistungsschutzschalter, wobei die elektrische Anlage mit einer Schalttafel ausgestattet ist, die für einen Kurzschlussstrom kalibriert ist, der niedriger als der gegebene Betrag ist, wobei das Verfahren mit Hilfe von Begrenzungsvorrichtungen (12) zur Begrenzung einer ersten Stromspitze durchgeführt wird, die jeweils ein Modul (10) zur Messung von Kurzschlussströmen im elektrischen Netz, eine elektrische Schaltung (12), die aus einem Schnellschalter (14), einem elektrischen Widerstand (16) und einer elektronischen Abschaltschaltung (18) besteht, die parallel miteinander geschaltet sind, enthalten, wobei jede Stromquelle mit einer jeweiligen Begrenzungsvorrichtung in Reihe geschaltet ist, die sie mit der elektrischen Anlage verbindet,
wobei das Verfahren **dadurch gekennzeichnet ist, dass** es die folgenden Schritte umfasst:
- antizipiertes Erfassen eines künftigen Auftretens der ersten Stromspitze in dem elektrischen Netz mittels eines Moduls (10) zum Messen von Kurzschlussströmen in dem elektrischen Netz, das dazu geeignet ist, die Ableitung des Stroms von der entsprechenden Stromquelle in Abhängigkeit von der Zeit dl/dt zu messen, um das Auftreten der ersten Stromspitze zu antizipieren und die Auslösung der Vorrichtung zu beschleunigen, bevor die Stromspitze ihren Spitzenwert erreicht,
- Umleiten des Stroms auf den elektrischen Widerstand (16), um die Stromspitze in der Schalttafel zu reduzieren, indem der Schnellschalter (14) geöffnet wird, bevor die Stromspitze ihren angenommenen Spitzenwert erreicht, wobei die elektronische Abschaltschaltung (18) geöffnet ist,
- Schließen der elektronischen Abschaltschaltung (18), um den Widerstand vor Überhitzung zu schützen, und dann Schließen des Schnellschalters (14), nachdem die erste Stromspitze durch den Widerstand (16) begrenzt wurde,
- Abschalten der elektrischen Anlage durch den Leistungsschutzschalter nach dem Schließen des Schnellschalters (14).

## Claims

1. A medium or high voltage electrical network comprising at least two current sources capable of contributing to a short-circuit current of the electrical network of a given value, an electrical installation connected to said current sources, and a circuit breaker, the electrical installation being equipped with a distribution board calibrated for a short-circuit current lower than said given value, the electrical network further comprising devices (12) for limiting a first current peak resulting from a fault in the electrical network, each of the current sources being connected to the electrical installation via a respective limitation device, each limitation device including:
- a module (10) for measuring short-circuit currents in said electrical network adapted for measuring the derivative of the current of the corresponding current source as a function of the time dl/dt so as to anticipate the appearance of a first current peak and accelerate the triggering of the limiting device (12) before the current peak reaches its crest value,
- an electrical circuit (22) formed of a fast switch (14), an electrical resistance (16) and an electronic cut-off circuit (18) mounted in parallel with each other, **characterised in that** it further includes:
- a detection and control module (20) configured, on the one hand and while the electronic cut-off circuit (18) is open, to open the fast switch (14) before the appearance of the first current peak to divert the current on the electrical resistance (16) so as to reduce the current peak in the distribution board and, on the other hand, to close the electronic cut-off circuit (18) so as to protect the resistance (16) against overheating, then the fast switch (14) after limiting the first current peak by said resistance (16), the electrical installation being cut off by the circuit breaker after closing the fast switch.

2. The medium or high voltage electrical network according to claim 1 wherein each electronic cut-off circuit (18) includes two thyristors mounted head-to-tail.

3. A method for limiting a first current peak resulting from a fault in a medium or high voltage electrical network comprising at least two current sources contributing to a short-circuit current of the electrical network of a given value, an electrical installation connected to said current sources, and a circuit breaker, the electrical installation being equipped with a distribution board calibrated for a short-circuit current lower than said given value, said method being implemented by means of devices (12) for limiting a first current peak each including a module (10) for measuring short-circuit currents in said electrical network, an electrical circuit (12) consisting of a fast switch (14), an electrical resistance (16) and an electronic cut-off circuit (18) mounted in parallel with each other, each current source being in series with a respective limiting device connecting it to the electrical installation, the method **characterised in that** it includes the following steps:
- detecting in advance a future appearance of the first current peak in said electrical network by means of a module (10) for measuring short-circuit currents in said electrical network adapted for measuring the derivative of the current of the corresponding current source as a function of the time dl/dt so as to anticipate the appearance of the first current peak and accelerate the triggering of the device before the current peak reaches its crest value,
- diverting the current on the electrical resistance (16) so as to reduce the current peak in the distribution board by opening the fast switch (14) before the current peak reaches its presumed crest value, the electronic cut-off circuit (18) being open,
- closing the electronic cut-off circuit (18) so as to protect the resistance against overheating, then closing the fast switch (14) after limiting the first current peak by said resistance (16),
- cutting off the electrical installation by the circuit breaker after closing the fast switch (14).
